## Europäisches Patentamt
## European Patent Office
## Office européen des brevets

(19)

(11) Numéro de publication: **0 050 572**
**B1**

(12)

# FASCICULE DE BREVET EUROPEEN

(45) Date de publication du fascicule du brevet:
**12.09.84**

(51) Int. Cl.³: **B 60 T 13/38,** B 60 T 17/08,
B 61 H 1/00, F 16 D 65/52

(21) Numéro de dépôt: **81401644.0**

(22) Date de dépôt: **20.10.81**

(54) **Bloc de freinage.**

(30) Priorité: **21.10.80 FR 8022448**

(43) Date de publication de la demande:
**28.04.82 Bulletin 82/17**

(45) Mention de la délivrance du brevet:
**12.09.84 Bulletin 84/37**

(84) Etats contractants désignés:
**AT BE CH DE GB IT LI NL SE**

(56) Documents cités:
**FR - A - 1 592 308**
**FR - A - 2 238 386**
**FR - A - 2 244 102**

(73) Titulaire: **WABCO WESTINGHOUSE EQUIPEMENTS FERROVIAIRES, 2 boulevard Westinghouse, F-93270 Sevran (Seine-Saint-Denis) (FR)**

(72) Inventeur: **Dalibout, Georges, 44 rue Jules Guesde, F-93220 Gagny (FR)**
Inventeur: **Durraffourt, Jean-François, 6 Villa des Bouleaux, F-94420 Plessis-Trevise (FR)**

(74) Mandataire: **Hirsch, Marc-Roger, 34 rue de Bassano, F-75008 Paris (FR)**

## Description

La présente invention se rapporte à un bloc de freinage utilisable en particulier pour l'application d'un sabot de frein sur une roue de véhicule ferroviaire, du type de celui décrit dans le document FR-A-2 238 386.

De tels blocs de freinage appliquent sur la jante des roues ou les pistes de frottement de ces roues, des sabots ou des garnitures de friction. Pour supporter les efforts de réaction qui leur sont appliqués, ces blocs sont généralement fixés ou suspendus au châssis de bogie du véhicule ferroviaire et comportent dans une enveloppe fermée: un cylindre de frein, un ou plusieurs leviers amplificateurs d'efforts et un organe de rattrapage du jeu entre le sabot de freinage et la roue ou la piste de freinage, de manière à maintenir ce jeu sensiblement constant au fur et à mesure de l'usure du sabot de frein et de la roue par la friction du freinage. Les blocs de freinage de ce type comportent également une ou plusieurs bielles de suspension des sabots de frein ou des garnitures de friction articulées pour s'opposer aux efforts de freinage proprement dits exercés tangentiellement à la roue.

Un des inconvénients principaux des blocs de freinage de type connu réside dans le fait que les réactions aux efforts d'application très importants exercés sur les semelles et/ou sabots de freins sont transmis intégralement aux corps de ces blocs de freinage et à leurs moyens de fixation aux châssis du véhicule. Ces efforts de réaction vibratoires et de grande intensité finissent par provoquer des fissurations et ruptures de fatigue des corps ou de leurs moyens de fixation. Lorsque l'on envisage d'augmenter la section des corps de fixations et/ou des moyens de fixation, on se heurte à des difficultés d'encombrement et de poids qui rendent très difficile le montage et/ou l'échange de ces blocs dans les châssis de bogie.

Les exploitants des réseaux ferroviaires sont conduits de plus en plus à utiliser des sabots de freins et des garnitures de friction en un matériau à faible coefficient de frottement et de bonne conductibilité thermique tel que la fonte phosphoreuse, pour ménager les tables de roulement des roues au cours des freinages à grande vitesse, ce qui oblige les fabricants de blocs de freinage à augmenter continuellement les efforts d'application de ces sabots et/ou garnitures de frein sur les pistes de frottement. Une telle augmentation des efforts d'application des garnitures de friction produit une diminution de la résistance et de la fiabilité des blocs de freinage, ou bien une augmentation du prix et un alourdissement de ces blocs, incompatibles avec les exigences d'une bonne exploitation ferroviaire.

L'un des buts de la présente invention est de réaliser un bloc de freinage de type classique, c'est-à-dire, comportant une enveloppe fermée contenant tous les éléments mobiles et/ou articulés tels que piston(s), tige(s) de piston(s), levier(s) d'amplification d'efforts et leurs articulations, système de rattrapage de jeu, de déverrouillage, de commande manuelle, de parc, pour les protéger des agressions extérieures et de la corrosion et qui soit à la fois:

— très résistant aux efforts mécaniques et aux vibrations intenses développés au cours du freinage,

— relativement léger dans sa partie amovible afin de permettre le montage et/ou l'échange standard aisé d'un tel bloc, nottament par l'action d'une seule personne,

— relativement peu onéreux pour la réalisation d'un système de freinage de roue intégré, comportant un frein de service et un frein de parc associé à un moyen de rattrapage de jeu commun.

A cet effet, le bloc de freinage utilisable en particulier pour l'application d'au moins un sabot de frein sur au moins une roue de véhicule ferroviaire, du type de celui connu du document FR-A-2238386, c'est-à-dire dans une enveloppe fermée, au moins un cylindre de frein de service actionné par un fluide sous pression et agissant sur au moins un levier amplificateur d'efforts relié mécaniquement à une tige de poussée sur laquelle est articulé un porte-semelles destiné à recevoir des sabots de freins et supporté par une bielle de suspension articulée au bloc de freinage pour recevoir la réaction des efforts de freinage, est caractérisé en ce que l'axe d'articulation du levier amplificateur d'efforts et l'axe d'articulation de la bielle de suspension sont fixés et encastrés rigidement à un châssis de support rigide du bloc de freinage et traversent l'enveloppe fermée pour l'accrocher à ces deux axes d'articulation, à l'aide de moyens d'arrêt tels que vis, écrous ou circlips.

Le châssis de support rigide peu être une plaque intermédiaire fixée latéralement (par exemple en trois points) du longeron du châssis d'un bogie ferroviaire, ou bien une plaque intermédiaire articulée à sa partie supérieure à un axe solidaire du longeron d'un châssis de bogie, tandis que sa partie inférieure est articulée à une bielle de réaction reliée, soit au châssis de bogie, soit à un autre porte-semelles pour fournir l'effort de réaction à l'effort d'application des sabots de frein du bloc sur la roue qui lui fait face.

Selon un mode de réalisation pratique de l'invention, l'enveloppe fermée comporte une partie de forme générale parallélépipédique contenant le levier amplificateur et fixée au cylindre de frein lui-même articulé directement ou par un support relais à l'axe d'articulation de la bielle de suspension, la partie de l'enveloppe de forme générale parallélépipédique etant elle-même traversée par la tige de poussée et l'axe d'articulation du levier amplificateur. Cette enveloppe fermée peut présenter une résistance faible et être réalisée dans un bloc de fonderie d'alliage léger ou un tube métallique de faible section car elle ne supporte pas les efforts de réaction des sabots de frein qui sont encaissés par la plaque intermédiaire mais seulement les efforts d'appui du système de rattrapage de jeu de la tige de poussée.

Selon un autre mode de réalisation de l'invention, un cylindre de frein de secours et/ou de parc tel qu'un cylindre à ressort est fixé au cylindre de frein de service symétriquement à ce dernier par rapport à la partie de forme générale parallélépipédique de l'enveloppe à l'aide de vis ou de boulons traversant cette partie de l'enveloppe et appliquant rigidement ces deux cylindres sur l'enveloppe. La liaison articulée entre le cylindre de frein de service et l'axe d'articulation de la bielle de suspension peut alors être obtenue par l'articulation du cylindre de frein de secours (fixé rigidement au cylindre de service) sur l'axe d'articulation de la bielle de suspension.

Diverses variantes de ces modes de fixation des cylindres de frein peuvent s'appliquer pour supprimer les efforts de réaction des sabots de frein sur l'enveloppe fermée tout en l'utilisant comme appui. Le support relais de l'axe d'articulation de la bielle de suspension (de préférence réalisé en tôle) vient s'appliquer au contact du cylindre de frein de service tout en enveloppant le profilé de section parallélépipédique (carrée ou rectangulaire de préférence) en matériau soudable (notamment en acier a parois minces) avec les faces duquel il est relié par un cordon de soudure. Le cylindre de frein de service est ainsi relié directement à l'axe d'articulation de la bielle de suspension, mais l'enveloppe fermée sert de raidisseur pour le support relais ou la liaison entre le cylindre de service et le cylindre de frein de secours et/ou de parc. La liaison par vis ou boulons à l'intérieur de l'enveloppe fermée peut avantageusement comporter des tubes ou entretoises disposés autour des tiges de ces vis ou boulons afin de diminuer les contraintes de serrage sur cette enveloppe.

Selon une autre disposition importante de l'invention, les deux axes d'articulation traversent l'enveloppe fermée par l'intermédiaire de supports élastiques, tels que des silent-blocs, autorisant au montage de l'enveloppe un léger désaxage de ces axes par rapport aux parois des passages ménagés dans l'enveloppe fermée et traversés par ces axes. En effet, les deux axes d'articulation très rigides sur lesquels est montée l'enveloppe ne peuvent pas être positionnés sur le châssis du véhicule avec une grande précision et il est nécessaire, au montage de l'enveloppe, d'adapter celle-ci à la position réelle de ces axes, l'ensemble pouvant ensuite être fixé rigidement au châssis du véhicule par serrage des moyens d'arrêt de l'enveloppe constitués de préférence par des écrous et des rondelles de serrage.

Selon un autre mode de réalisation, le ressort de rappel du piston du cylindre de frein de service est en appui, à son extrémité opposée à ce piston de frein de service, sur un manchon de déverrouillage manuel d'une liaison mécanique entre le piston de frein de secours et le levier amplificateur d'efforts de telle manière que ce ressort de rappel serve simultanément à rappeler le piston de frein de service vers la position desserrée et le manchon de déverrouillage en position verrouillée.

Le manchon de déverrouillage peut porter un galet susceptible de coopérer avec un profil de came solidaire d'une tige de déverrouillage mobile transversalement à la tige de piston du cylindre de frein de service sous l'action d'une traction normale exercée sur la tige de déverrouillage à l'encontre d'un ressort de rappel, de telle sorte que le profil de came repousse le galet et le manchon de déverrouillage dans une position déconnectant mécaniquement le piston de frein de secours et le levier amplificateur d'efforts. Dans ce mode de réalisation, le manchon de déverrouillage présente, du côté de la tige du piston de frein de service, la forme d'une fourche entourant cette tige de piston et traversée par l'axe de liaison des tiges de piston de frein de service et de secours avec le levier amplificateur d'efforts.

D'autres buts et avantages de la présente invention apparaîtront à la lecture de la description suivante et des figures jointes, données à titre illustratif mais non limitatif.

La figure 1 est une section transversale du bloc de freinage selon l'invention

La figure 2 est une vue en élévation d'un bloc de freinage selon l'invention fixé à un support suspendu au longeron d'un châssis de bogie.

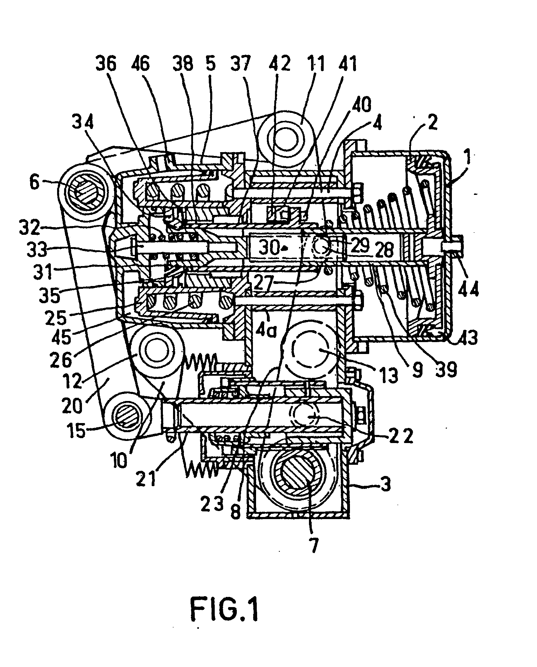

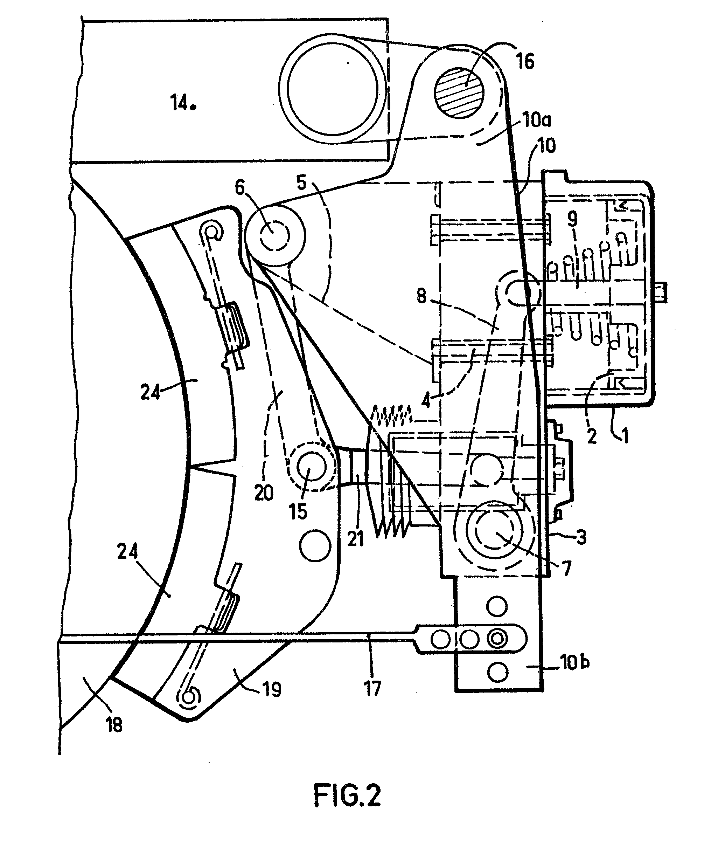

En référence à la figure l, le bloc de freinage ferroviaire comprend un cylindre de frein de service 1 à l'intérieur duquel est susceptible de se déplacer un piston 2 actionné par un fluide sous pression (air comprimé). Ce cylindre 1 est monté sur une face d'un boîtier parallélépipédique 3 par l'intermédiaire de vis 4 fixant sur une autre face parallèle de ce boîtier, une console munie d'un axe 6 jouant le rôle de point fixe d'articulation pour le bloc de freinage. Cette console est constituée sur la figure 1 par un cylindre de frein de parc à ressort 5, comme on va l'expliquer plus loin. L'intérieur du boîtier parallélépipédique 3 est traversé par un second axe fixe d'articulation 7, sur lequel est articulé un levier amplificateur d'efforts 8 articulé à son autre extrémité à la tige 9 du piston d'actionnement 2. Les deux axes fixes précités 6 et 7 sont, soit fixés rigidement au châssis de bogie du véhicule ferroviaire, soit portés par une plaque intermédiaire résistante 10, en acier soudé ou moulé par exemple, dont la fixation ou la liaison au châssis de bogie peut s'effectuer de diverses façons illustrées sur les figures 1 et 2.

Selon le mode de réalisation représenté sur la figure 1, la plaque 10 est fixée latéralement en trois points 11, 12, 13 sur un longeron du châssis d'un bogie ferroviaire.

Une autre possibilité de liaison représentée sur la figure 2 est obtenue en suspendant cette plaque intermédiaire 10 à sa partie supérieure 10a par une liaison articulée à un axe 16 reliant par exemple les deux longerons 14 du châssis de bogie, tandis qu'un prolongement 10b de sa partie inférieure est relié par une tige 17 à un point de réaction pris sur une traverse du châssis de bogie ou solidaire d'un levier porte-semelles situé de l'autre côté de la roue 18 sur laquelle viennent s'appliquer les sabots de frein 24 supportés par un porte-semelles 19, lui-même articulé en son centre sur un axe 15 relié au bloc de freinage par deux bielles 20.

L'axe 15 est articulé, d'une part, aux bielles de suspension 20, elles-mêmes articulées au premier axe fixe 6, d'autre part, à une tige de poussée 21 articulée en 22, per l'intermédiaire d'un écrou de rattrapage de jeu, sur le levier amplificateur d'efforts 8. La tige de poussée 21 est associée à un dispositif de rattrapage de jeu automatique 23 de type connu, par exemple à vis-écrou réversible. Le porte-semelles 19 peut porter de préférence deux sabots de frein 24 ou bien une semelle unique en matériau de friction tel que la fonte phosphoreuse ou une matière composite de friction.

Si l'on se reporte à la figure 1, on voit que la console support du premier axe fixe 6 est constituée par le corps du cylindre 5 du frein de parc à ressort monté sur le boîter 3 du bloc de freinage en opposition au cylindre de frein de service 1. Les deux cylindres sont directement reliés à l'axe 6 par des boulons de fixation 4 qui traversent le boîtier 3 et appliquent les deux cylindres l'un sur l'autre par l'intermédiaire d'entretoises tubulaires 4a qui évitent de transmettre les efforts de serrage au boîtier 3 qui peut alors être très léger, notamment en tôle ou en alliage d'aluminium. Le bloc de freinage standard peut être équipé de cylindres de diamètres différents et de plaques intermédiaires 10 de différentes largeurs pour correspondre aux différentes dimensions des supports de fixation et des châssis de bogie.

Pour assurer le couplage mécanique entre le frein de service et le frein de parc, le piston de service 2 du cylindre 1 comporte une tige de piston creuse 9 dans laquelle est ménagé un taraudage 27 à pas réversible et qui est articulée aux deux bras du levier 8 par les sorties d'un axe 28 logé dans une boutonnière 29 du levier 8. Une vis 30 portant un cône 31 et filetée au même pas réversible que le taraudage 27, est vissée à l'intérieur de la tige creuse 9. La vis 30 est repoussée en direction du piston 2 dans une position axiale fixe par l'action d'un ressort 32 qui plaque contre une butée du cylindre 5 la tête d'une tige de réglage 33 fixée à la vis 30. Le piston 25 du cylindre à ressort 5 porte, par l'intermédiaire de roulements de butée, une pièce rotataive porte-cône 34, munie d'un crabotage 35 en prise unidirectionnelle avec un crabotage correspondant 36 d'un manchon 37 coulissant dans des cannelures 38 solidaires du corps du cylindre 5. Le manchon 37 est repoussé en direction de la pièce porte-cône 34 par le ressort de rappel 39 du piston de service 2. Le manchon 37 porte un galet 40 disposé en face d'un profil de came 41 d'un axe 42 disposé transversalement dans le boîtier 3 et susceptible d'être déplacé axialement à l'encontre d'un ressort de rappel par traction manuelle sur une chape accessible à l'extérieur du bloc. La chambre de pression 43 du cylindre de frein de service est reliée par un raccord 44 à un distributeur de pression de freinage et la chambre de pression 45 du cylindre à ressort est reliée par un raccord 46 à une valve de contrôle du frein de parc.

Le bloc de freinage qui vient d'être décrit fonctionne de la façon qui va maintenant être explicitée. En service normal du véhicule ferroviaire équipé de blocs de freinage selon l'invention, la chambre 45 du frein de parc est alimentée en air comprimé à une pression suffisante pour repousser le piston 25 vers la droite en butée sur le fond du cylindre 5 à l'encontre du puissant ressort 26 d'actionnement du frein de parc. Au serrage des freins de service, la chambre 43 est alimentée en air comprimé et le piston de service 2 est repoussé vers la gauche de la figure 1. Le taraudage réversible 27 de la tige creuse 9 entraîne en rotation la vis 30 maintenue en position axiale fixe par l'appui de la tête de la taige 33 sur une butée du cylindre 5.

Le déplacement du piston de service 2 vers la gauche fait tourner le levier amplificateur d'efforts 8 autour de l'axe fixe 7 solidaire du châssis de bogie (figure 1) ou de la plaque intermédiaire 10 (figure 2) et entraîne, par l'articulation 22, la tige de poussée 21 vers la gauche jusqu'à ce que les sabots de frein 24 viennent en contact avec la roue à freiner 18 (voir la figure 2) avec un effort sensiblement proportionnel à la pression de freinage délivrée par le distributeur de freinage à la chambre de service 43.

Au desserrage des freins, la chambre de frein de service 43 est reliée à l'échappement par le distributeur de pression de freinage et le piston de service 2 est repoussé vers la droite de la figure par son ressort de rappel 39 en entraînant en rotation (en sens inverse) la vis 30 toujours maintenue en position axiale fixe par le ressort 32 et la tige 33.

L'application du frein de parc ou de secours à ressort s'effectue après un serrage de freins par le frein de service à la pression maximale, de façon à rattraper tous les jeux ainsi que la course élastique de la timonerie et de tous les organes soumis aux efforts d'application des freins.

Pour appliquer le frein d'immobilisation, la valve de contrôle du frein de parc réduit alors la pression dans la chambre 45 en la reliant à l'échappement, ce qui permet au piston 25 poussé par le ressort 26 de se déplacer vers la gauche. Après la prise de contact entre les deux cônes 31 et 34, l'effort de réaction du ressort 26 se transmet à la vis 30 et, via les filets 27, à la tige 9 et à l'axe 28 du levier 8. Le manchon 37 repoussé par le ressort 39 empêche par ses cannelures 38 la rotation de la pièce porte-cône 34 rendue solidaire de la vis 30 par l'accouplement des cônes 31 et 34.

On peut alors desserrer le frein pneumatique car le frein d'immobilisation à ressort s'applique comme frein de parc de puissance sensiblement équivalente à celle du frein de service à sa pression maximale.

Le desserrage du frein d'immobilisation s'opère en faisant remonter la pression régnant dans la chambre 45. Le piston à ressort 25 refoule alors les cônes accouplés vers la droite ainsi que la vis 30 jusqu'à l'instant où la tige 33 arrête son déplacement vers la droite. Le piston à ressort 25 continue seul sa course jusqu'à sa butée de droite et les cônes 31 et 34 se désolidarisent. Le levier 8 d'amplification d'efforts revient vers la droite de la figure en provoquant le recul de la tige de poussée 21 et l'éloignement des sabots de frein 24 de la roue 18.

En cas de vidange intempestive de la chambre de frein à ressort 45, par suite d'une défaillance de son flexible d'alimentation par exemple, le piston à ressort 25 se déplace vers la gauche, rattrape le jeu entre les cônes 31 et 34 et les applique l'un sur l'autre, puis entraîne vers la gauche la vis 30 alors solidaire du piston de service 2 et de l'axe 28 du levier 8.

Le manchon 37 coulisse dans les cannelures 38 également vers la gauche, sous l'action du ressort 39, mais vient en butée sur l'axe 42 par le galet 40 avant que le piston 25 n'ait pu appliquer les sabots de frein 24 sur la roue 18. Les crabotages 35 et 36 en prise unidirectionnelle se désolidarisent et le piston 25 continue sa course jusqu'à sa butée de gauche sur le corps du cylindre 5. La pièce-cône 34 n'étant plus immobilisée en rotation par le manchon 37, elle se met à tourner entre ses butées de maintien par couplage des cônes 31 et 34 chaque fois que le piston de service 2 est actionné pour entraîner la tige de piston 9 et l'axe du levier 8 car la vis 30 tourne alors dans le taraudage 27 de cette tige 9.

Le réarmement du frein à ressort après un fonctionnement intempestif du frein d'immobilisation s'effectue automatiquement en remettant sous pression la chambre à ressort 45 (normalement après réparation de son circuit d'alimentation). Le piston 25 est refoulé vers sa butée de droite et la mise en butée de la tige 33 désolidarise les cônes 31 et 34. Le frein d'immobilisation ainsi réarmé est prêt pour une nouvelle utilisation.

En cas de nécessité, le desserrage manuel du frein d'immobilisation s'opère de la façon qui va être décrite. Le frein d'immobilisation ayant été serré, la chambre à ressort 45 est reliée à l'atmosphère et l'effort de réaction du ressort 26 se substitue à la pression pnematique agissant en service sur le piston de service 2. Le véhicule étant immobilisé en position freinée sans source d'air pour desserrer le frein d'immobilisation par voie pnematique, pour desserrer manuellement le frein de parc, on agit par traction sur la chape de l'axe 42. Le profil de came 41 repousse vers la droite le galet 40 et le manchon 37, ce qui provoque le désaccouplement des crabotages 35 et 36. Le porte-cône 34 et la vis 30 désaccouplés du corps de cylindre (en rotation) se mettent à tourner sous l'action simultanée de la réaction de la tige de piston 9 vers la droite de la figure et de la poussée du ressort 26 sur le piston 25 vers la gauche jusqu'à ce que le piston 25 vienne en butée sur le corps de cylindre 5, tandis que la vis 30 continue de tourner sous l'action de la réaction des sabots de frein exercée vers la droite de la figure et tendant à repousser (avec le ressort 39) le levier amplificateur d'efforts 8 et le piston 2 vers la droite en position freins desserrés.

L'axe 42 est rappelé en position normale par son ressort de rappel et dès que l'opérateur relâche sa traction sur lui, il revient dans la position représentée sur la figure 1 où le profil de came 41 est à distance du galet 40. Pour réarmer le frein, il suffit de remettre la chambre 45 sous pression. La vis 30 et la pièce 34 peuvent alors tourner sans entraîner en rotation le manchon 37 car le crabotage 35 glisse sur le crabotage 36 sans l'entraîner. En effet, la rotation de la vis 30 au cours du déplacement du piston 25 vers la droite s'effectue dans le sens (opposé à celui de l'application des freins) pour lequel les crabotages 35 et 36 n'entrent pas en prise.

Bien entendu, la présente invention n'est nullement limitée aux modes de réalisation décrits et représentés. Ainsi, comme mentionné précédemment, les axes 6 et 7 fixés et encastrés rigidement dans la plaque intermédiaire 10 peuvent avantageusement traverser le boitier 3 par l'intermédiaire de paliers supports relativement élastiques tels que des supports en élastomères formant «silent-blocs». Ces supports élastiques permettent d'enfiler aisément le boitier 3 sur les axes même lorsque ceux-ci sont légèrement désaxés par rapport aux alésages ménagés dans le boitier 3 pour le passage de ces axes, puis de serrer le boitier 3 sur ces axes par l'intermédiaire d'écrous de serrage pour supprimer les jeux entre ces axes et le boitier 3 et limiter ainsi les vibrations du boitier 3 en service sur un bogie ferroviaire. Pour reculer le porte semelle 19 afin de changer les sabots de frein 24, on peut faire tourner une tête de desserrage manuel ou bien refouler le porte semelle 19 a l'aide d'une barre à mine formant levier en appui sur le châssis de bogie.

## Revendications

1. Bloc de freinage utilisable en particulier pour l'application d'au moins un sabot de frein sur au moins une roue de véhicule ferroviaire, du type comportant, dans une enveloppe fermée, au moins un cylindre de frein de service (1) actionné par un fluide sous pression et agissant sur au moins un levier amplificateur d'efforts (8) relié mécaniquement à une tige de poussée sur laquelle est articulé un portesemelles (19) destiné à recevoir des sabots de freins (24) et supporté par une bielle de suspension (20) articulée au bloc de freinage pour recevoir la réaction des efforts de freinage, caractérisé en ce que l'axe d'articulation (7) du levier amplificateur d'efforts (8) et l'axe d'articulation (6) de la bielle de suspension (20) sont fixés et encastrés rigidement à un châssis de support rigide du bloc de freinage et traversent l'enveloppe fermée pour l'accrocher à ces deux axes d'articulation (6,7), à l'aide de moyens d'arrêts tels que des vis, écrous ou circlips.

2. Bloc de freinage selon la revendication 1, caractérisé en ce que les deux axes d'articulation (6,7) traversent l'enveloppe fermée par l'intermédiaire de supports élastiques, tels que des silent-blocs, autorisant au montage de l'enveloppe un léger désaxage de ces axes par rapport aux parois des passages ménagés dans l'enveloppe fermée et traversés par ces axes.

3. Bloc de freinage selon la revendication 1 ou 2, caractérisé en ce que le châssis de support rigide est une plaque intermédiaire (10) fixée latéralement au longeron du châssis d'un bogie ferroviaire.

4. Bloc de freinage ferroviaire selon la revendication 1 ou 2, caractérisé en ce que le châssis de support rigide est une plaque intermédiaire (10) articulée à sa partie supérieure (10a) à un axe (16) solidaire du longeron (14) d'un châssis de bogie, tandis que sa partie inférieure (1ob) est articulée à une bielle de réaction (17) reliée, soit au châssis de bogie, soit à un autre porte-semelles pour fournir l'effort de réaction à l'effort d'application des sabots de frein du bloc sur la roue qui lui fait face.

5. Bloc de freinage ferroviaire selon l'une quelconque des revendications 1 à 4, caractérisé en ce que l'enveloppe fermée comportae une partie de forme générale parallélépipédique (3) contenant le levier amplificateur (8) et fixée au cylindre de frein lui-même articulé directement ou par un support-relais à l'axe d'articulation (6) de la bielle de suspension, la partie de l'enveloppe de forme générale parallélépipédique étant elle-même traversée et par l'axe d'articulation (7) du levier amplificateur d'efforts et par la tige de poussée (21).

6. Bloc de freinage selon la revendication 5, caractérisé en ce qu'un cylindre (5) de frein de secours et/ou de parc tel qu'un cylindre à ressort est fixé au cylindre de frein de service (1) symétriquement à ce dernier par rapport à la partie de forme générale parallélépipédique (3) de l'enveloppe à l'aide de vis ou de boulons (4) traversant cette partie de l'enveloppe et appliquant rigidement ces deux cylindres sur l'enveloppe.

7. Bloc de freinage selon la revendication 6, caractérisé en ce que la liaison articulée entre le cylindre de frein de service (1) et l'axe d'articulation (6) de la bielle de suspension (20) est obtenue par l'articulation, sur l'axe d'articulation de la bielle de suspension, du cylindre de frein de secours (5) fixé rigidement au cylindre de service par l'intermédiaire de l'enveloppe.

8. Bloc de freinage selon la revendication 6 ou 7, caractérisé en ce que le ressort de rappel (39) du piston (2) du cylindre de frein de service est en appui à son extrémité opposée à ce piston de frein de service sur un manchon (37) de déverrouillage manuel d'une liaison mécanique entre le piston (25) de frein de secours et le levier amplificateur d'efforts (8) de telle manière que ce ressort de rappel serve simultanément à rappeler le piston (2) de frein de service vers la position desserrée et le manchon (37) de déverrouillage en position verrouillée.

9. Bloc de freinage selon la revendication 8, caractérisé en ce que le manchon (37) de déverrouillage porte un galet (40) susceptible de coopérer avec un profil de came (41) solidaire d'une tige de déverrouillage (42) mobile transversalement à la tige de piston du cylindre de frein de service sous l'action d'une traction normale exercée sur la tige de déverrouillage à l'encontre d'un ressort de rappel, de telle sorte que le profil de came (41) repousse le galet (40) et le manchon (37) de déverrouillage dans une position déconnectant mécaniquement le piston (25) de frein de secours et le levier amplificateur d'efforts (8).

10. Bloc de freinage selon la revendication 8 ou 9, caractérisé en ce que le manchon (37) de déverrouillage présente, du côté de la tige du piston de frein de service (1), la forme d'une fourche entourant cette tige de piston et traversée par l'axe (28) de liaison des tiges de piston de frein de service et de secours avec le levier amplificateur d'efforts (8).

**Claims**

1. Brake unit usable in particular for the application of at least one brake-shoe on at least one railway vehicle wheel, of the type comprising, in a closed housing, at least one service brake cylinder (1) actuated by a pressurized fluid and acting on at least one force amplifier lever (8) mechanically connected to a push rod on which is articulated a brake-head (19), adapted to receive brake shoes (24) and supported by a head hanger (20) articulated at the brake unit to receive the reaction of the braking forces, characterized in that the articulation axis (7) of the force amplifier lever (8) and the articulation axis (6) of the head hanger (20) are fixed and rigidly embedded in a rigid support chassis of the brake unit and through-cross the closed housing to hook it at these two articulation axes (6, 7) with the use of attachment means such as screws, nuts or circlips.

2. Brake unit according to claim 1, characterized in that the two articulation axes (6, 7) pass across closed housing trough the intermediary of elastic supports, such as silent blocks, authorizing at the mounting of the housing a slight offsetting of these axes with respect to the walls of the passages provided in the closed housing and through crossed by these axes.

3. Brake unit according to claim 1 or 2, characterized in that the rigid support chassis is a intermediary plate (10) fixed laterally to the frame stringer of a railway truck.

4. Railway brake unit according to claim 1 or 2, characterized in that the rigid support chassis is an intermediary plate (10) articulated at its upper part (10a) at an axis integral with the frame stringer of a railway truck, while its lower part (10b) is articulated at a reaction rod (17) connected, either to the truck chassis, or to another brake head to provide the reaction effort to the application effort of the brake shoes of the unit on the opposite wheel.

5. Railway brake unit according to any one of claims 1 or 4, characterized in that the closed housing comprises a part having agenerally parallelepipedic shape (3) containing the amplifier lever (8) and fixed to the brake cylinder itself articulated directly or by a relay-support to the articulation axis (6) of the head hanger, the part of the housing having a generally parallelepipedic shape being itself through-crossed by the articulation axis (7) of the force amplifier lever and by the push rod (21).

6. Brake unit according to claim 5, characterized in that an emergency and/or park brake cylinder (5) such as a spring cylinder is fixed to the service brake cylinder (1) symmetrically to this latter with respect to the part having the generally parallelepipedic shape (3)of the housing by means of screws or bolts (4) through crossing this part of the housing and applying rigidly these two cylinders onto the housing.

7. Brake unit according to claim 6, characterized in that the hinged coupling between the service brake cylinder (1) and the articulation axis (6) of the head hanger (20) is obtained by the articulation, on the articulation axis of the head hanger, of the emergency brake cylinder (5) fixed rigidly to the service cylinder by the intermediary of the housing.

8. Brake unit acording to claim 6 or 7, characterized in that the return-spring (39) of the piston (2) of the service brake cylinder abuts at ist end opposite to this servvice brake piston on a manual unlocking sleeve (37) of a mechanical coupling between the emergency brake piston (25) and the force amplifier lever (8) in such a way that this return-spring acts simultaneously to return the service brake piston (2) towards the released position and the unlocking sleeve (37) in locked position.

9. Brake unit according to claim 8, characterized in that the unlocking sleeve (37) bears a roller (40) adapted to cooperate with a cam outline integral with an unlocking rod (42) transversally movable to the piston rod of the service brake cylinder under the action of a normal traction exerted on the unlocking rod against a return-spring, so that the cam outline (41) pushes the roller (40) and the unlocking sleeve (37) in a position mechanically disconnecting the emergency brake piston (25) and the force amplifier lever (8).

10. Brake unit according to claim 8 or 9, characterized in that the unlocking sleeve (37) presents, on the side of the piston rod of the service brake (1), the shape of a fork surrounding this piston rod and through crossed by the axis (28) connecting the piston rods of the service and emergency brakes with the force amplifier lever (8).

## Patentansprüche

1. Bremseinheit, die insbesondere zur Anwendung wenigstens eines Bremsklotzes auf wenigstens ein Rad eines Schienenfahrzeugs benützbar ist, des Typs der in einem geschlossenen Gehäuse wenigstens einen Betriebsbremszylinder (1) enthält, der von einer unter Druck stehenden Flüssigkeit bewegt wird und auf wenigstens einen Kräftverstärkerhebel (8) wirkt, der mechanisch mit einer Schubstange verbunden ist, an die ein Bremschuhträger (19) angelenkt ist, der dazu bestimmt ist Bremsklötze (24) aufzunehemen und von einem Pendel (20) getragen wird, das an der Bremseinheit gelenkig angebracht ist um die Reaktionskraft der Bremskräfte zu empfangen, dadurch gekennzeichnet, dass die Gelenkachse (7) des Bremskraftverstärkers (8) und die Gelenkachse des Pendels (20) an einem starren Trägergestell der Bremseinheit angebracht und ohne Bewegungsspielraum eingelassen sind und das geschlossene Gehäuse durchqueren, um ihn an diese beiden Gelenkachsen (6, 7) mit Hilfe von Befestigunsmitteln, wie Schrauben, Muttern oder Sicherungsringe anzubringen.

2. Bremseinheit nach Anspruch 1, dadurch gekennzeichnet, dass die zwei Gelenkachsen (6, 7) das geschlossene Gehäuse mit Hilfe elastischer Träger durchqueren, wie Silentblöcke, die bei der Montage des Gehäuses eine leichte Exzentrierung dieser beiden Achsen in Bezug auf die Seitenwände der in dem geschlossenen und von diesen Achsen durchquerten Gehäuse vorbereiteten Durchgänge erlaubt.

3. Bremseinheit nach Anspruch 1 oder 2, dadurch gekennzeichnet, dass der starre Trägerrahmen eine seitlich am Längsbalken des Rahmens, eines Eisenbahndrehgestells befestigte Zwischenplatte (10) ist.

4. Eisenbahnbremseinheit nach Anspruch 1 oder 2, dadruch gekennzeichnet, dass der starre Trägerrahmen eine an ihrem oberen Teil (10a) mit einer mit dem Längsbalken (14) eines Fahrgestellrahmens fest verbundenen Achse (16) gelenkig verbundene Zwischenplatte (10) ist, während deren unterer Teil (10b) mit einem Reaktionspleuel (17) gelenkig verbunden ist, das entweder mit dem Drehgestellrahmen oder mit einem anderen Bremsschuhträger verbunden ist, um die Reaktionskraft gegen die Kraft zur Beaufschlagung der Bremsschuhe der Bremseinheit auf dem ihm gegenüberliegenden Rad zu liefern.

5. Eisenbahnbremseinheit nach einem der Ansprüche 1 bis 4, dadurch gekennzeichnet, dass das geschlossene Gehäuse einen im algemeinen quaderförmigen Teil (3) umfasst, der den Verstärkerhebel (8) enthält und am Bremszylinder angebracht ist, der selbst unmittelbar oder durch ein Relais-Träger an der Gelenkachse (6) des Pendels angelenkt ist, wobei der im allgemeinen quaderförmige Teil des Gehäuses selbst sowohl von der Gelenkachse (7) des Kräftverstärkerhebels und von der Schubstange (21) durchquert wird.

6. Bremseinheit nach Anspruch 5, dadurch gekennzeichnet, dass ein Notbremszylinder (5) und/oder Parkbremszylinder, wie ein Federspeicherzylinder, am Betriebsbremszylinder (1) symmetrisch zu diesem in bezug auf den im allgemeinen quaderförmigen Teil (3) des Gehäuses mit Hilfe von Schrauben oder Bolzen (4), die diesen Teil des Gehäuses durchqueren und diese beiden Zylinder starr an das Gehäuse binden, angebracht wird.

7. Bremseinheit nach Anspruch 6, dadurch gekennzeichnet, dass die gelenkige Verbindung zwischen dem Betriebsbremszylinder (1) und der Gelenkachse (6) des Pendels (20) durch die Anlenkung des mit Hilfe des Gehäuses starr am Betriebszylinder angebrachten Notbremszylinders (5) auf der Gelenkachse des Pendels erhalten wird.

8. Bremseinheit nach Anspruch 6 oder 7, dadurch gekennzeichnet, dass die Rückholfeder (39) des Kolbens (2) des Betriebsbremszylinders an ihrem diesen Kolben des Betriebsbremszylinders entgegen gesetzten Ende auf einer Hülse (37) zur manuellen Entriegelung einer mechanischen Verbindung zwischen dem Kolben (25) der Notbremse und dem Kräfteverstärkehebel (8) aufliegt, so dass diese Rückholfeder dazu dient gleichzeitig den Kolben (2) der Betriebsbremse in die gelöste Stellung und die Hülse (37) zur Entriegelung in Verriegelungsstellung zurück zu holen.

9. Bremseinheit nach Anspruch 8, dadurch gekennzeichnet, dass die Hülse (37) zur Entriegelung eine Rolle (40) trägt, die mit einer Nockenform (41) zusammenwirken kann, welche mit einer Entriegelungsstange (42) fest verbunden ist, die in Querrichtung auf die Kolbenstange der Betriebsbremse bei einer gewöhnlichen Zugbewegung beweglich ist, die auf die Entriegelungsstange gegen eine Rückholfeder, so vorgenommen wird, so dass die Nockenform (41) die Rolle (40) und die Entriegelungshülse (37) in eine Position zurück schieben, die in mechanischer Weise den Kolben (25) der Notbremse und den Kräfteverstärkerhebel (8) trennt.

10. Bremseinheit nach Anspruch 8 oder 9, dadurch gekennzeichnet, dass die Hülse (37) zur Entriegelung auf der Seite der Stange des Kolbens der Betriebsbremse (1) die Form einer diese Kolbenstange umgebenden Gabel aufweist und von der Verbindungsachse (25) der Stangen der Betriebs- und Notbremse mit dem Kräfteverstärkerhebel (8) durchquert wird.

FIG.1

FIG.2